**Europäisches Patentamt**

**European Patent Office**

**Office européen des brevets**

(19)

(11) Veröffentlichungsnummer: **0 099 964**
**B1**

(12) # EUROPÄISCHE PATENTSCHRIFT

(45) Veröffentlichungstag der Patentschrift:
19.03.86

(21) Anmeldenummer: **83104263.5**

(22) Anmeldetag: **30.04.83**

(51) Int. Cl.⁴: **G 01 F 11/26, B 65 D 47/06**

(54) **Dosiervorrichtung mit Kugelventil.**

(30) Priorität: **08.05.82 DE 3217396**

(43) Veröffentlichungstag der Anmeldung:
**08.02.84 Patentblatt 84/6**

(45) Bekanntmachung des Hinweises auf die Patenterteilung:
**19.03.86 Patentblatt 86/12**

(84) Benannte Vertragsstaaten:
**AT BE CH DE FR GB IT LI NL**

(56) Entgegenhaltungen:
**WO - A - 82/00348**
**DE - B - 1 133 650**
**DE - B - 1 202 672**
**FR - A - 402 258**
**FR - A - 2 304 061**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Vierkötter, Peter, Sperberweg 7, D-5090 Leverkusen (DE)**

LIBER, STOCKHOLM 1986

## Beschreibung

Die Erfindung betrifft eine Dosiervorrichtung zum Aufsetzen auf einen Flüssigkeitsbehälter, insbesondere auf die Öffnung einer Flasche, mit Kugelventil an einem zu einer Ausgießöff-nung mit Ventilkugeldichtsitz fürenden, geraden Ausfluß-rohr, in der die Ventilkugel längs einer Ventilkugelführung durch Kippen des Behälters aus einer Ruhelage hin zu dem Ven tilkugeldichtsitz zu bewegen ist, gemäß WO-A1-82/00348.

Dosierer bzw. Dosiervorrichtungen, die bei jedem Kippen des zugehörigen Behälters eine bestimmte Flüssigkeitsmenge freigeben, sind beispielsweise aus der DE-C-12 02 672 bekannt. Dabei darf der Behälter nicht flexibel sein, weil schon kleine auf den Behälter ausgeübte Drucke zu erheblichen Do sierschwankungen führen können. Bei einer weiteren aus dem DE-U-78 10 073 bekannten Dosiervorrichtung kann die Dosier menge zwar durch Vorgabe einer wechselweise gegenüber dem Behälterinnenraum und dem Außenraum abzudichtenden Dosier blase relativ genau vorgegeben und durch Kippen des Behälters der Dosierkammer entnommen werden, die Einrichtung ist aber wegen der beiden Ventile nicht nur aufwendig in der Herstellung sondern auch um ständlich zu handhaben. Ein weiterer Nachteil ist die erforderliche Baugröße der bekannten Doppelkammerdosierer. Hierbei müssen nämlich beide Kammern jeweils die Größe des zu dosierenden Produktvolumens haben, d.h. für ein Dosiervolumen von z.B. 50 ml muß das Volumen des Dosierers mindestens 100 ml betragen. So große Volumina sind in Behälteröffnungen, z.B. Flaschenhälsen, häufig nicht unterzubringen.

Der Erfinding liegt die Aufgabe zugrunde, eine Dosiervorrichtung eingangs genannter Art zu schaffen, die in der Regel in der zu bestückenden Behälteröffnung selbst unterzubringen ist und mit deren Hilfe ohne das Erfordernis einer aufwendigen Doppelventilkonstruktion durch einfaches Kippen des Behälters in die Überkopfstellung eine bestimmte Produktmenge zu dosieren ist. Die erfindungsgemäße Lösung besteht bei der Dosiervorrichtung mit Kugelventil an einem geraden Ausflußrohr, in der die Ventilkugel längs einer Ventilkugelführung durch Kippen des Behälters aus einer Ruhelage hin zu einem Ventilkugeldichtsitz zu bewegen ist, darin, daß sich die Ventilkugelfürung als Wendelgang um das Ausflußrohr erstreckt.

Da also erfindungsgemäß die Ventilkugelführung als das Ausfluß-rohr ungebender Wendelgang ausgebildet ist, wird die zu dosierende Flüssigkeitsmenge durch eine Wendelung mit einer vorgegebenen, von der Kugel aus ihrer Ruhelage hin zu dem Ventilkugeldichtsitz zurückzulegenden Weglänge bestimmt. Die Dosiermenge kann somit schon allein durch Wahl dieses gewendelten Kugelweges und der Kugelwichte den jeweiligen Erfordernissen entsprechend ausgewählt werden.

Ersichtlich entfallen erfindungsgemäß Vordosierkammern, Doppelventilkonstruktionen oder ähnliches. Das Volum en eines unter Ausnutzung der erfindungsgemäßen Lehre herzustellenden Dosiereinsatzes kann daher in der Größenordnung des zu dosierenden Produktvolumens liegen. Die Dosiereinrichtung läßt sich somit - selbst bei größeren Dosiervolumina - in der Regel in die jeeeilige Behältermündung integrieren. Zu diesen auch die Wirtschaftlichkeit betreffenden Vorteilen kommt hinzu, daß die erfindungsgemäße Dosiervorrichtung auch für den Einsatz bei aus flexiblem material bestehenden Behältern geeignet ist. Ersichtlich körnnen nämlich Behälterverformungen einen Einfluß auf die Dosiermenge nicht haben.

Die Wendel kann an der Ruhelageseite der Vorrichtung an einem die Kugel zurückhaltenden Abschlußring oder dergleichen enden. Die Dosiermenge hängt dann in gewissem Maße davon ab, ob das von der Kugel zu erreichende rückwärtige Ende der Wendel beim Kippen auf der Oberseite oder Unterseite der Dosiereinrichtung liegt; die Kugel kann nämlich bei versetztem Einbau maximal bis zu einer Wendelsteigung frei fallen und erst bei Überkopfstellung der Vorrichtung über die Wendel weiterrollen.

Das Dosieren selbst kann dabei allein durch das von der Wendel umgebende zentrale Ausflußrohr, bei entsprechenden Öffnungen in dem ringförmigen Deckel der Wendel aber auch durch den Wendelgang hindurch erfolgen. Um zu verhindern, daß beim Zurückkippen nach dem Dosieren die Ventilkugel auf dem entsprechenden Ausgangsende des Ausflußrohrs liegenbleibt oder bei entsprechender lichter Weite des Ausflußrohrs in dieses hineinfällt, wird zweckmäßig der zum Ventilkugeldichtsitz führende Ausgang des Ausflußrohrs mit einer das Eindringen der Ventilkugel in das Rohr bzw. das Aufliegen auf dem Rohr ausschließenden Schikane versehen.

Eine vereinfachte Handhabung der Dosiervorrichtung wird gemäß weiterer Erfindung erreicht, wenn der dem Ventilkugeldichtsitz abgewandte Eingang des Ausflußrohrs trichterförmig erweitert ist, wenn sich an die trichterförmige Erweiterung eine für die Ventilkugel nur zum Ausflußrohr offene Kugelkammer mit im wesentlichen dem Außendurchmesser der Wendel gleichendem Durchmesser sowie einer die freie Beweglichkeit der Ventilkugel zulassenden Länge in Wendelachsrichtung anschließt und wenn das Ausflußrohr einen seitlichen Ausgang mit Zwangsführung für die Kugel zum umgebenden Wendelgang sowie zurmindest bis zum Ausgang eine den Kugeldurchmesser übersteigende lichte Weite besitzt. Bei dieser Ausgestaltung der erfindungsgemäßen Vorrichtung liegt die Kugel in der Ruhelage also unabhängig vom Einbau der Vorrichtung immer auf der Unterseite der Kugelkammer, da sich die Kugel dort frei bewegen kann, gelangt beim Kippen zunächst in das Ausflußrohr und wird von dort umgelenkt an einer in das Ausflußrohr eingebauten, für die Flüssigkeit durchlässige Ablenk-Schikane in eine seitliche Öffnung des Ausflußrohrs zum Wendelgang geleitet.

Die zu dosierende Flüssigkeit kann auch bei dem zweiten Ausführungsbeispiel allein durch das Ausflußrohr aber auch durch den Wendelgang zur Ausgießöffnung geleitet werden. Hierbei ist es wieder zweckmäßig, den zum Ventilkugeldichtsitz führenden Ausgang des Ausflußrohrs mit einer das Eindringen der Ventilkugel in das Rohr oder das Aufliegen der Kugel auf dem Rohr ausschließenden, aber für das Produkt durchlässigen, Schikane auszustatten. Ferner soll der der Behälterinnern zugewandte Boden der Kugelkammer die Ventilkugel zurückhaltende aber das zu dosierende Produkt frei durchlassende Öffnungen besitzen.

Die erfindungsgemäße Dosiervorrichtung ist in der Massenproduktion, z.B. durch Pressen oder Spritzguß, unproblematisch herzustellen. Zweckmäßig besteht die Vorrichtung aus zwei getrennt produzierten Teilen, die - bei gleichzeitigem Einsetzen der Kugel - bei Anvendung leicht ineinanderzustecken sind. Das eine Teil soll dabei aus dem Ausflußrohr mit umgebender Wendel und gegebenenfalls angesetzter Kugelkammer bestehen, während das andere Teil ein in die zu bestückende Behälteröffnung einzusetzendes, den Ventilkugeldichtsitz an der Ausgießöffnung aufweisendes Gehäuse bildet.

Anhand der schematischen Darstellung von Ausführungsbeispielen werden weitere Einzelheiten der Erfindung erläutert. Es zeigen:

Fig. 1 bis 4 eine erste Dosiervorrichtung in verschiedenen Schwenkstellungen; und

Fig. 5 bis 8 eine weitere Dosiervorrichtung in verschiedenen Schwenkstellungen.

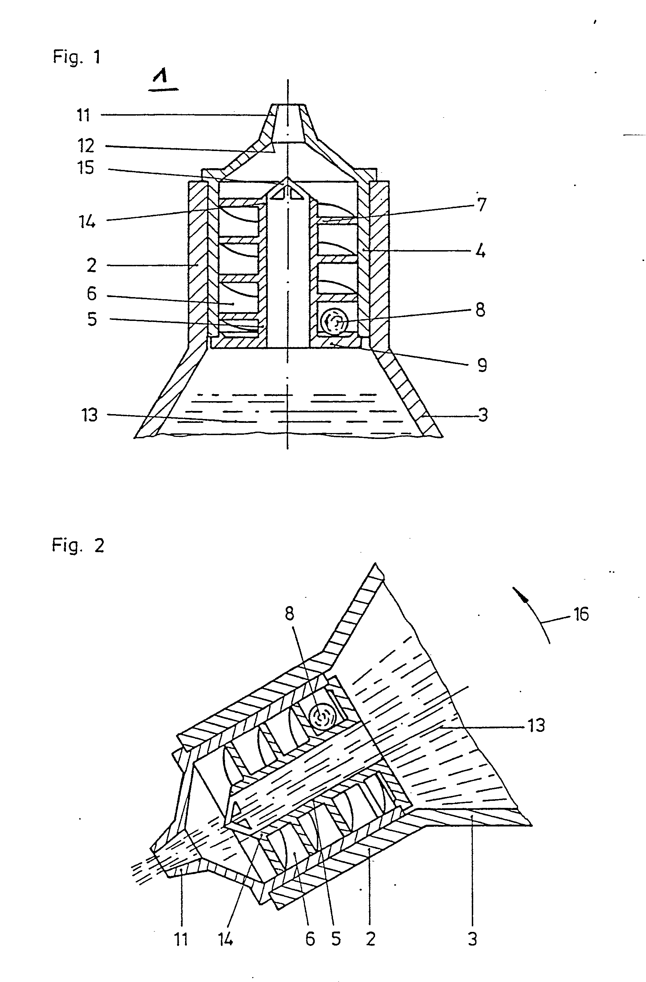

Die insgesamt mit 1 bezeichnete Dosiervorrichtung gemäß Fig. bis 4 besteht aus einem in die Öffnung 2 eines Behälters 3 eingepaßten Gehäuse 4 und einem im wesentlichen aus dem Ausfluß-rohr 5 mit umgebenden Wendelgang 6 bestehenden, insgesamt mit 7 bezeichneten Einsatzteil. Im Wendelgang 6 befindet sich eine Ventilkugel 8, die beim Kippen der Dosiervorrichtung 1 bzw. des Behälters 3 aus der Ruhelage am rückseitigen Abschlußring 9 des Wendelgangs 6 gemäß Fig. 2 bis 4 in Pfeilrichtung 10 längs des Wendelgangs 6 zu dem an der Ausgießöffnung 11 des Gehäuses 4 vorgesehenen Ventilkugeldichtsitz 12 rollt.

Beim Kippen fließt Produkt 13 vor allem durch das zentrale Ausflußrohr 5 aus dem Behälter 3 zur Ausgießöffnung 11 des Gehäuses 4. Dieser Produktfluß hält so lange an, bis die in Pfeilrichtung 10 ebenfalls nach unten rollende Kugel 8 an den Ventildichtsitz 12 gelangt, die Ausgießöffnung 11 verschließt und damit den Dosiervorgang beendet. Beim Zurückkippen kann die Ventilkugel 8 nicht in das zentrale Ausflußrohr 5 gelangen oder dessen Ausgang 14 verschließen, wenn dort eine in etwa konisch in Richtung auf die Ausgießöffnung 12 zugespitzte, für das Produkt 13 durchlässige Schikane 15 vorgesehen wird.

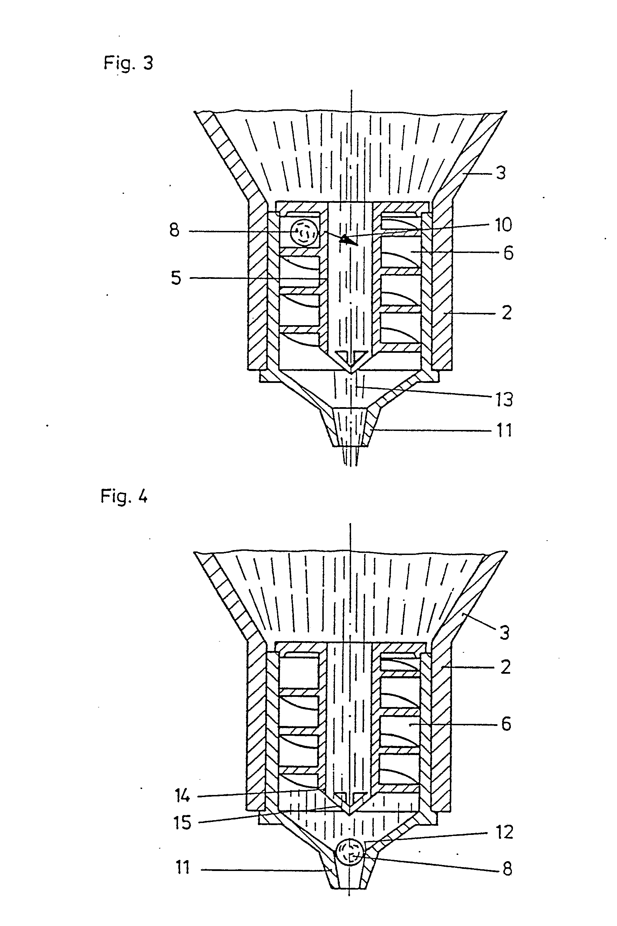

In den Fig. 1 bis 4 werden vier Phasen der Handhabung einer Dosiervorrichtung dargestellt. In der Phase nach Fig. 1 befindet sich die Vorrichtung in Ruhestellung, bei Fig. 2 wird das Dosieren durch Kippen des Behälters 3 in Pfeilrichtung 16, d.h. in Richtung auf die Überkopfstellung, eingeleitet. In Fig. 3 ist die Überkopfstellung von Behälter 3 und Dosiervorrichtung 1 erreicht. Die Kugel 8 beginnt sich in Pfeil richtung 10 zu bewegen. In der Phase nach Fig. 4 hat die Ventilkugel 8 den Dichtsitz 12 erreicht und der Dosiervorgang ist beendet.

Ersichtlich ist es bei der Ausführungsbeispiel nach Fig. 1 bis 4 erforderlich, die Dosiervorrichtung 1 richtungsbestimmend in die Gehäusemündung bzw. -öffnung 2 einzubauen, wenn bei jedem Kippen ein gleich langer Kugelweg im Wendelgang 6 und damit eine gleiche Dosiermenge erhalten werden soll. Bei ver setztem Einbau bzw. bei Schwenken der Dosiervorrichtung 1 in verschiedene Richtungen kann die Ventilkugel 8 maximal bis zu einer Wendelsteigung freifallen, bevor sie bei Überkopfstellung des Behälters 3 im Wendelgang 6 weiterrollt.

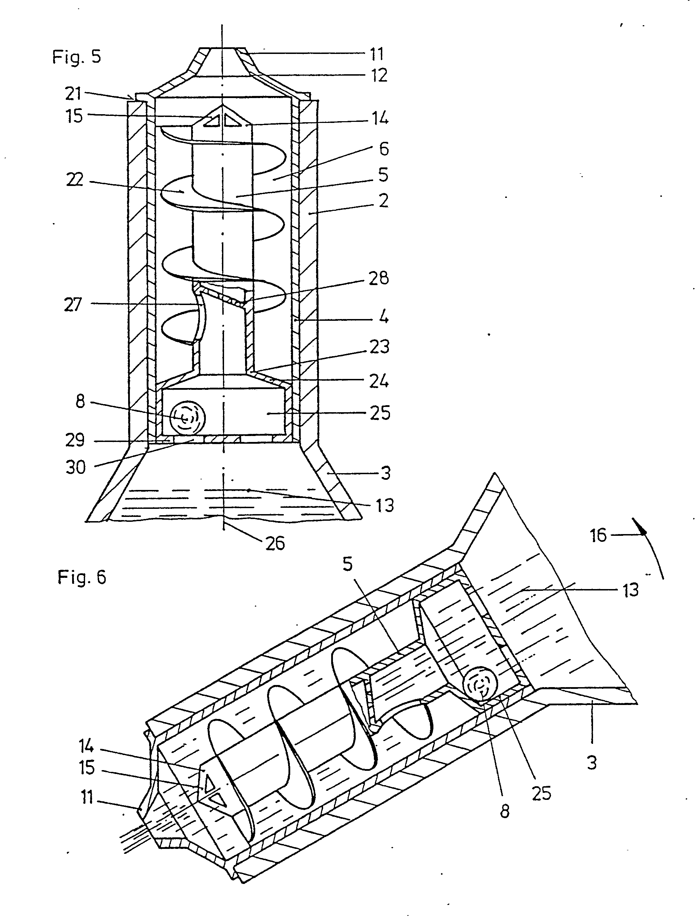

In den Fig. 5 bis 8 wird eine beliebig in die Behältermündung 2 also nicht richtungsbestimmend einzubauende, insgesamt mit 21 bezeichnete Dosiervorrichtung schematisch dargestellt. Die Voriichtung besteht wieder aus einem in die Öffnung 2 eines Behälters 3 eingepaßten Gehäuse 4, welches auch die Ausgieß-öffnuiig 11 mit Ventilkugeldichtsitz 12 umfaßt, und aus einem insgesam t mit 22 bezeichneten Einsatzteil. Zu letzterem gehö ren das zentrale Ausflußrohr 5 und der das Ausflußrohr 5 um gebende Wendelgang 6.

Der wesentliche Unterschied von Fig. 5 bis 8 gegenüber dem Ausführungsbeispiel nach Fig. 1 bis 4 besteht darin, daß der dem Ventilkugeldichtsitz 12 abgewandte bzw. rückwärtige Eingang 23 des Ausflußrohrs 5 trichterförmig erweitert ist und daß sich an die trichterförmige Erweiterung 24 eine für die Ven tilkugel 8 nur zum Ausflußrohr 5 hin offene Kugelkammer 25 mit im wesentlichen dem Außendurchmesser des Wendelgangs 6 gleichendem Durchmesser sowie einer die Beweglichkeit der Ventilkugel 8 zulassenden Länge in Wendelachsrichtung 26 anschließt. Ferner besitzt das Ausflußrohr 5 einen seitlichen Ausgang 27 mit Zwangsführung, insbesondere Ablenk-Schikane 28, für die Kugel 8 zum umgebenden Wendelgang 6 sowie zumindest bis zum Ausgang 27 eine den Kugeldurchmesser übersteigende lichte Weite. Der dem Innern des Behälters 3 zugewandte Boden 29 der Kugelkammer 25 soll die Ventilkugel 8 zurückhaltende aber für das Produkt 13 frei durchlässige Öffnungen 30 aufweisen.

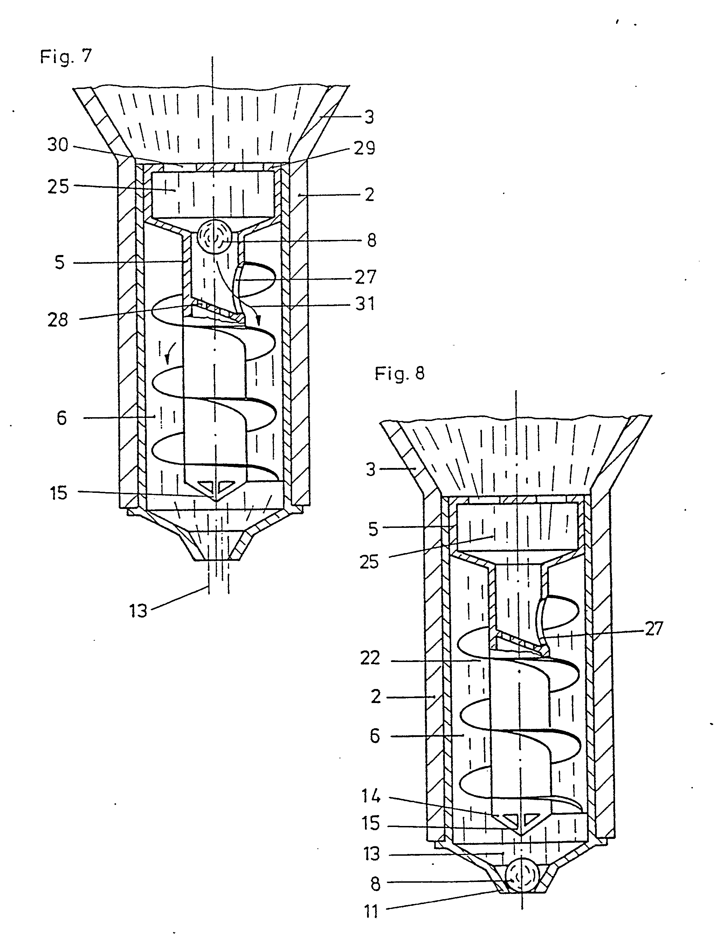

In Fig. 5 befinden sich der Behälter 3 bzw. die Dosiervorrichtung 21 in Ruhestellung. Die Ventilkugel 8 liegt in der sich ausgehend vom zentralen Ausflußrohr 5 trichterförmig erweiternden Kugelkammer 25 des Wendel-Einsatzteils 22. In der in der Fig. 6 dargestellten Phase beginnt die Dosierung durch Schwenken der Vorrichtung in Pfeilrichtung 16. Das Produkt 13 fließt vor allem durch das zentrale Ausflußrohr 5 zur Aus-gießöffnung 11. In Fig. 7 wird die Überkopfstellung von Behälter 3 bzw. Dosiereinrichtung 21 erreicht. Die Kugel 8 fällt aus der Kugelkammer 25 frei bis zur Ablenk-Schikane 28, wird dort in Pfeilrichtung 31 über den seitlichen Ausgang 27 in den Wendelgang 6 geleitet und rollt längs der Wendel bis zum Wentilkugeldichtsitz 12 an der Ausgießöffnung 11. Dieser Moment ist in der Phase nach Fig. 8 erreicht. In den Endstellung am Ventilsitz 12 verschließt die Ventilkugel 8 den Ausgang bzw. die Ausgießöffnung 11 der Dosiervorrichtung 21 ebenso wie im Falle von Fig. 4; der Dosiervorgang ist dann beendet.

Beim Zurückkippen der Vorrichtung in die Ruhestellung gemäß Fig. 5 kann die Ventilkugel 8 nicht in das zentrale Ausfluß-rohr 5 fallen oder dessen Ausgang 14 verschließen, wenn an dieser Stelle wieder eine Schikane 15 wie in Fig. 1 bis 4 vorgesehen wird. Vielmehr läuft die Kugel 8 längs des Wendelgangs 6 über den seitlichen Ausgang 27 in die Kugelkammer 25 zurück.

## Bezugszeichenliste

1 = Dosiervorrichtung
2 = Öffnung
3 = Behälter
4 = Gehäuse
5 = Ausflußrohr
6 = Wendelgang
7 = Einsatzteil
8 = Ventilkugel
9 = Abschlußring
10 = Pfeilrichtung
11 = Ausgießöffnung
12 = Ventilkugeldichtsitz
13 = Produkt
14 = Ausgang (5)
15 = Schikane
16 = Pfeil
21 = Dosiervorrichtung
22 = Einsatzteil
23 = rückwärtiger Eingang (5)
24 = trichterförmige Erweiterung (5)
25 = Kugelkammer
26 = Wendelachsrichtung
27 = seitlicher Ausgang (5)
28 = Ablenk-Schikane
29 = Boden (25)
30 = Öffnung in 29
31 = Pfeil

## Patentansprüche

1. Dosiervorrichtung (1, 21) zum Aufsetzen auf einen Flüssig keitsbehälter (3), insbesondere auf die Öffnung (2) einer Flasche, mit Kugelventil an einem zu einer Ausgießöffnung (11) mit Ventilkugeldichtsitz (12) führenden, geraden Ausflußrohr (5), in der die Ventilkugel (8) längs einer Ventilkugelführung durch Kippen des Behälters (3) aus einer Ruhelage hin zu dem Ventilkugeldichtsitz (12) zu bewegen ist dadurch gekennzeich net, daß sich die Ventilkugelführung als Wendelgang (6) um das Ausflußrohr (5) erstreckt.

2. Dosiervorrichtung nach Anspruch 1, dadurch gekennzeichnet, daß der zum Ventilkugeldichtsitz (12) fürende Ausgang (14) des Ausflußrohrs (5) eine das Eindringen der Ventilkugel (8) in das Rohr ausschließende Schikane (15) aufweist.

3. Dosiervorrichtung nach Anspruch 1 oder 2, dadurch gekennzeichnet, daß der dem Ventilkugeldichtsitz (12) abgewandte Eingang (23) des Ausflußrohrs (5) trichterförmig erweitert ist, daß sich an die trichterförmige Erweiterung (24) eine für die Ventilkugel (8) nur zum Ausflußrohr (5) hin offene Kugel- kammer (25) mit im wesentlichen dem Außendurchmesser des Wendelgaiis (6) gleichendem Durchmesser sowie einer die freie Beweglichkeit der Ventilkugel (8) zulassende Länge in Wendelachsrichtung (26) anschließt und daß das Ausflußrohr (5) einen seitlichen Ausgang (27) mit Zwangsführung (28) für die Kugel (8) zum umgebenden Wendelgang (6) sowie zumindest bis zum Ausgang (27) eine den Kugeldurchmesser übersteigende lichte Weite besitzt (Fig. 5 bis 8).

4. Dosiervorrichtung nach Anspruch 3, dadurch gekennzeichnet, daß der dem Behälterinnern zugewandte Boden (29) der Kugelkammer (25) die Ventilkugel (8) zurückhaltende aber flüssig keitsdurchlässige Öffnungen (30) besitzt.

5. Dosiervorrichtung nach einem oder mehreren der Ansprüche 1 bis 4, dadurch gekennzeichnet, daß das Ausflußrohr (5) mit umgebendem Wendelgang (6) und gegebenenfalls angesetzter Kugelkammer (25) in einem in die zu bestückende Behälteröffnung(2) einzusetzenden, den Ventilkugeldichtsitz (12) am Ausgang aufweisenden Gehäuse (4) angeordnet ist.

6. Dosiervorrichtung nach einem oder mehreren der Ansprüche 1 bis 5, dadurch gekennzeichnet, daß die Dosiermenge durch die Länge des beim Kippen von der Ventilkugel (8) zurückzulegenden Weges und/oder durch das Gewicht der Ventilkugel (8) vorgegeben ist.

## Claims

1. Metering device (1, 21) for placing onto a liquid container (3), in particular onto the opening (2) of a bottle, with ball valve at a straight outflow tube (S), which leads to a pourer opening (11) with valve ball sealing seat (12) and in which the value ball (8) is to be moved along a value ball guide out of a rest position towards the value ball sealing seat (12) through tilting of the container (3), characterised thereby, thet the valve ball guide extends as helical passage (6) around the outflow tube (5).

2. Metering device according to claim 1, characterised thereby, that the outlet (14), leading to the value ball sealing seat (12) of the outflow tube (5) displays an obstacle (15) excluding the ingress of the value ball (8) into the tube.

3. Metering device according to claim 1 or 2, characterised thereby, that the entry (23) of the outflow tube (5) remote from the valve ball sealing seat (12) is enlarged in funnel shape, that the funnel-shaped enlargement (24) is adjoined by a ball chamber (25), which for the valve ball (8) is open only to the outflow tube (5) and has a diameter substantially equal to the external diameter of the helical passage (6) as well as a length, in axial direction (26) of the helix, permitting the free mobility of the valve ball (8) and that the outflow tube (5) possesses a lateral exit (27) with constrained guidance (28) of the ball (8) to the surrounding helical passage (6) as well as a clear width exceeding the ball diameter at least as far es tho exit (27)(Figs. 5 to 8).

4. Metering device according to claim 3, characterised thereby, that the bottom (29) of the ball chamber (25) facing the interior of the container possesses openings (30), which hold back the valve ball (8), but are permeable by liquid.

5. Metering device according to one or more of the claims 1 to 4, characterised thereby, that the outflow tube (5) with surrounding helical passage (6) and ball chamber (25) to be placed thereon in a given case is arranged in a housing (4), which at the exit displays tha valve ball sealing seat (12) and is to be inserted into the container opening (2) to be equipped.

6. Metering device according to one or more of the claims 1 to 5, characterised thereby, that the metered quantity is predetermined by the length of the path to be traversed by the valve ball (8) during the tilting and/or by the weight of the valve ball (8).

**Revendications**

1. Doseur (1,21) adaptable sur un récipient à liquide (3), en particulier sur l'orifice (2) d'une bouteille, comportant une soupape à bille sur un tube d'écoulement rectiligne (5) conduisant à un orifice verseur (11) avec siége de la bille de soupape, dans lequel cette bille de soupape (8) peut se déplacer le long d'un guide en partant d'une position de repos et vers le siège de la bille de soupape (12), suite au basculement du récipient (3), caractérisé par le fait que le guide de la bille de soupape est constitué par un conduit hélicoïdal (6) situé autour du tube d'écoulement (5).

2. Doseur selon la revendication 1, caractérisé par le fait que la sortie (14) du tube d'écoulement (5), menant au siège de la bille de soupape, comporte une chicane (15) interdisant la penetration de la bille (8) dans le tube.

3. Doseur selon l'une ou l'autre des revendications 1 ou 2, caractérisé par le fait que l'entrée (23) du tube d'écoulement (5), opposée au siège de la bille de soupape (12), est agrandie en forme d'entonnoir, qu'à cet égrandissement en forme d'entonnoir (24) fait suite une chambre de bille (25), ouverte pour la bille de soupape (8) seulement en direction du tube d'écoulement (5), ayant un diamètre pratiquement égal au diamètre extérieur du conduit hélicoïdal, ainsi qu'une longueur, dans la direction (26) de l'axe de ce conduit, qui permet la libre mobilité de la bille de soupape (8) et que le tube d'écoulement (5) comporte une sortie latérale (27) avec guidage obligatoire (28) pour la bille (8), vers le conduit hélicoïdal (6) qui l'entoure, ainsi que, au moins jusqu'à la sortie (27), une largeur libre dépassant le diamètre de la bille (figures 5 à 8).

4. Doseur selon la revendication 3, caractérisé par le fait que le fond (29) de la chambre de bille (25), tourné vers l'intérieur du récipient, comporte des ouvertures (30) retenant la bille de soupape (8) mais laissant passer les liquides.

5. Doseur selon l'une quelconque des revendications 1 à 4, caractérisé par le fait que le tube d'écoulement (5), avec le conduit hélicoïdal (6) qui l'entoure et éventuellement la chambre de bille (25) adjointe, est disposé dans une enveloppe ou carter (4) adapté pour pouvoir être introduit dans l'orifice du récipient (2) à équiper et présentant à sa sortie le siège de la bille de soupape (12).

6. Doseur selon l'une quelconque des revendications 1 à 5, caractérisé par le fait que la quantité de dosage est prédéterminée par la longueur de la distance à parcourir par la bille de soupape (8) lors du basculement du récipient et/ou par le poids de cette bille de soupape (8).

Fig. 1

Fig. 2

Fig. 3

Fig. 4

Fig. 5

Fig. 6

Fig. 7

Fig. 8